# FASCICULE DE BREVET EUROPEEN

(11) **EP 2 432 676 B1**
(45) Date de publication et mention de la délivrance du brevet: **11.03.2015**
(21) Numéro de dépôt: 10723189.6
(22) Date de dépôt: 02.04.2010
(51) Int. Cl.: B62D 25/20, B62D 33/02

(54) **PLANCHER ARRIÈRE POUR VÉHICULE AUTOMOBILE ET VÉHICULE ÉQUIPÉ D'UN TEL PLANCHER**
FONDBODEN FÜR EIN KRAFTFAHRZEUG UND KRAFTFAHRZEUG MIT SOLCH EINEM BODEN
REAR FLOOR FOR AN AUTOMOBILE AND AUTOMOBILE INCLUDING SUCH A FLOOR

(30) Priorité: 20.05.2009 FR 0953367
(43) Date de publication de la demande: 28.03.2012
(73) Titulaire: Renault S.A.S., 92100 Boulogne-Billancourt (FR)
(72) Inventeur: KOWALSKI, Philippe, F-78180 Montigny Le Bretonneux (FR); CORBEL-HEY, Anne, F-92350 Le Plessis Robinson (FR)
(86) Numéro de dépôt international: PCT/FR2010/050633
(87) Numéro de publication internationale: WO 2010/133779

(56) Documents cités:
- EP-A- 0 756 984
- US-A- 1 328 684
- US-A- 4 188 058
- US-B1- 6 347 454

## Description

La présente invention concerne un plancher arrière pour véhicule automobile.

Le plancher arrière désigne la partie du plancher qui s'étend sous l'espace de rangement des bagages.

Ce plancher arrière est composé d'au moins une tôle présentant des nervures embouties s'étendant dans la direction longitudinale du véhicule afin d'augmenter la résistance aux efforts de flexion et de torsion du plancher arrière. Un tel plancher est connu du document EP 0 756 984 A1.

L'axe des roues arrière est situé sous le plancher arrière.

Lors du roulage du véhicule, les roues et la ligne d'échappement transmettent vers le plancher arrière des ondes de vibration qui génèrent des bruits qui sont perceptibles dans l'habitacle du véhicule, malgré le revêtement insonorisant qui recouvre le plancher et les silentblocs qui relient les organes de suspension des roues au plancher.

Les nervures longitudinales du plancher permettent d'atténuer en partie les vibrations mais ne les atténuent pas suffisamment par rapport aux critères de confort exigés par les utilisateurs.

Le but de la présente invention est de remédier à cet inconvénient en créant un plancher arrière capable d'atténuer efficacement les ondes de vibration qui lui sont transmises lors du roulage du véhicule.

Ce but est atteint, selon l'invention, grâce à un plancher arrière pour véhicule automobile comprenant une série de nervures embouties dans la tôle du plancher, s'étendant dans la direction longitudinale du véhicule, caractérisé en ce que l'une au moins des nervures embouties est reliée à une nervure voisine par une partie de nervure inclinée par rapport à la direction longitudinale.

Les essais effectués par la demanderesse ont permis en effet de constater de façon surprenante qu'en reliant l'une au moins des nervures à une nervure voisine par une partie de nervure inclinée, on obtenait une atténuation significative des vibrations transmises par le plancher arrière, lors du roulage du véhicule.

Il en résulte une diminution notable du bruit dans l'habitacle et une augmentation du confort perçu par les occupants.

Avantageusement, ladite nervure, ladite partie de nervure inclinée et ladite nervure voisine forment ensemble un Y.

Dans une version préférée de l'invention, ladite partie de nervure inclinée et ladite nervure voisine sont situées dans une zone proche du bord arrière du plancher arrière, l'ouverture des deux branches du Y étant dirigée vers le bord arrière du plancher.

Dans cette version, ladite nervure voisine est située dans le prolongement d'une autre nervure s'étendant parallèlement à ladite nervure.

Dans une autre version préférée de l'invention, ladite partie de nervure inclinée est reliée à ladite nervure dans une zone proche du bord arrière du plancher arrière, l'ouverture des deux branches du Y étant dirigée vers le bord avant du plancher ;

Selon d'autres particularités de l'invention :
- ladite nervure s'étend près d'un bord latéral dudit plancher arrière ;
- ladite nervure, ladite partie de nervure inclinée et ladite nervure voisine sont situées dans une zone proche du milieu du plancher arrière ;
- lesdites nervures sont régulièrement espacées ;
- la distance comprise entre les nervures est sensiblement égale à la largeur des nervures.

L'invention concerne également un véhicule automobile équipé d'un plancher arrière selon l'invention.

D'autres particularités et avantages de l'invention apparaîtront encore tout au long de la description ci-après.

Aux dessins annexés, donnés à titre d'exemples, non limitatifs :
- la figure 1 est une vue en plan d'une première version préférée d'un plancher arrière selon l'invention,
- la figure 2 est une vue en plan d'une seconde version préférée d'un plancher arrière selon l'invention.

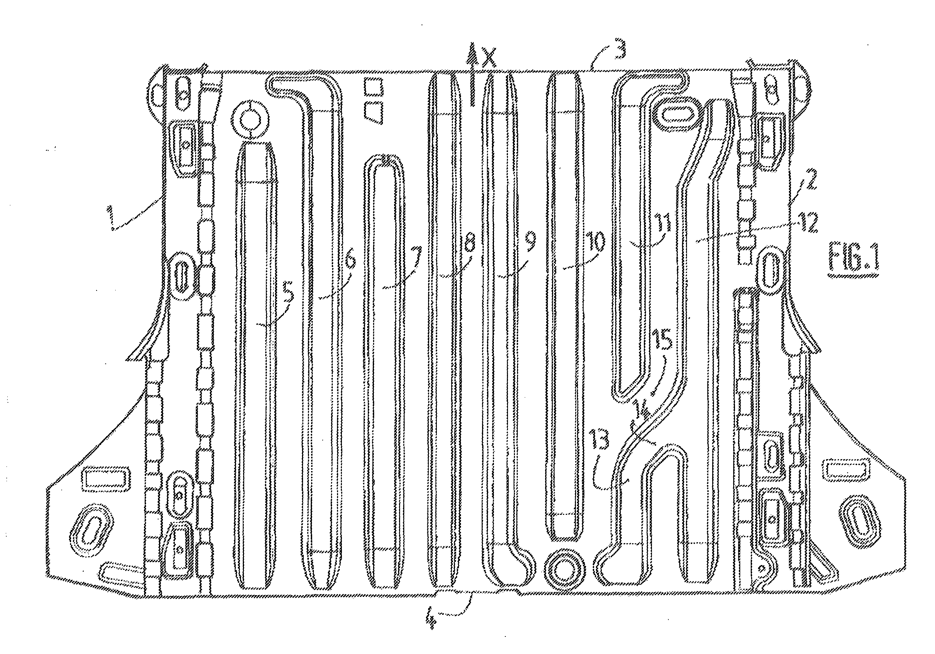

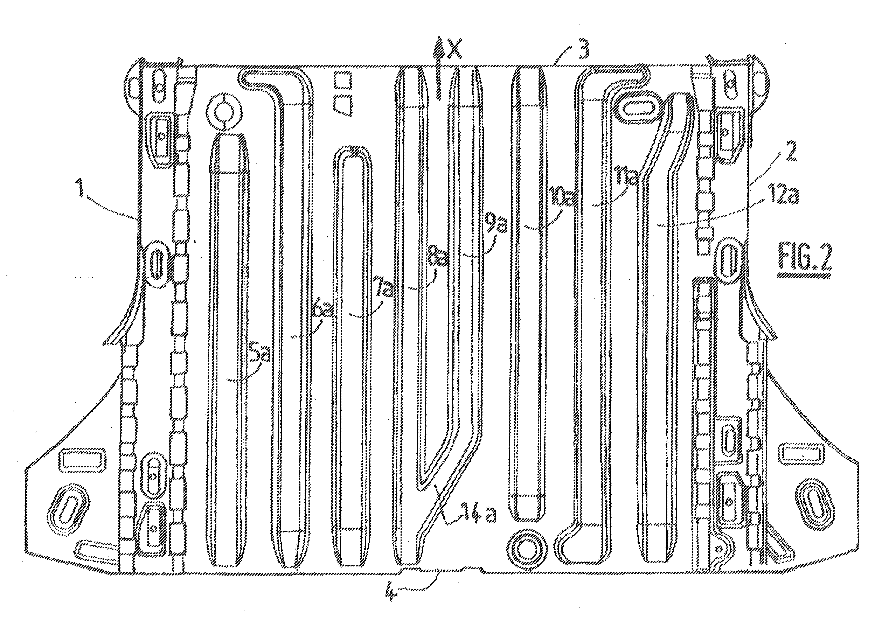

Les planchers arrière représentés sur les figures 1 et 2 comportent deux bords latéraux 1, 2, un bord avant 3 et un bord arrière 4.

Le bord avant 3 est destiné à être raccordé à un plancher s'étendant sous l'habitacle du véhicule et supportant notamment les sièges des occupants.

Les bords latéraux 1, 2 épousent la forme des passages de roues arrière.

Chacun des planchers arrière comprend une série de nervures embouties 5, 6, 7, 8, 9, 10, 11, 12 ; 5a, 6a, 7a, 8a, 9a, 10a, 11a, 12a qui s'étendent dans la direction longitudinale X du véhicule.

Ces nervures 5, 6, 7, 8, 9, 10, 11, 12 ; 5a, 6a, 7a, 8a, 9a, 10a, 11a, 12a confèrent au plancher arrière une bonne résistance aux efforts de flexion.

Les planchers arrière représentés sur les figures 1 et 2 sont destinés à être placés juste au-dessus de l'axe des roues arrière et de ce fait sont sollicités par les ondes de vibration engendrées lors du roulage du véhicule.

Ainsi, ces planchers arrière transmettent habituellement vers l'habitacle des bruits qui peuvent être perçus comme gênants pour les occupants.

Les planchers arrière ont été sélectionnés à la suite d'essais comparés, en raison de leur aptitude à absorber les vibrations engendrées lors du roulage d'un véhicule équipé de tels planchers.

Ces essais comparés ont été effectués sur un banc d'essais en utilisant des capteurs de mesure de la transmission des ondes de vibration dans la direction longitudinale X, la direction transversale Y et la direction verticale Z du véhicule.

Ces mesures ont permis d'établir des diagrammes comportant en ordonnée l'amplitude et en abscisse la fréquence des vibrations.

La gamme de fréquence était comprise entre 20 et 300Hz.

Les meilleurs résultats ont été obtenus pour le plancher arrière représenté sur la figure 1.

Le diagramme amplitude-fréquence obtenu révélait une aptitude à absorber les fréquences voisines de 250Hz.

D'excellents résultats ont également été obtenus, dans le cas du plancher arrière représenté sur la figure 2 qui présente un avantage pour les fréquences voisines de 180 Hz.

Dans les deux planchers arrière, l'une 12 (voir figure 1) ou 8a (voir figure 2) des nervures embouties est reliée à une nervure voisine 13 ou 9a par une partie de nervure 14 ou 14a qui est inclinée par rapport à la direction longitudinale X.

Dans le cas du plancher arrière représenté sur la figure 1, la nervure 12, la partie de nervure inclinée 14 et la nervure 13 forment ensemble un Y lorsqu'on examine le plancher de l'avant vers l'arrière, vu de dessus. Ce Y présente ainsi une branche longue sensiblement rectiligne formée par la nervure 12, et une branche courte formée par la nervure voisine 13 et la partie de nervure inclinée 14, la nervure voisine 13 étant sensiblement parallèle à la nervure 12.

Par ailleurs, la nervure 13 voisine de la nervure 12 et formant la branche courte du Y est située dans le prolongement d'une nervure 11 parallèle à la nervure 12.

La nervure 11 est ainsi plus courte que la nervure 12 et est séparée de la partie de nervure inclinée 14 par un espace 15.

La figure 1 montre, en outre, que la nervure 12 qui forme un Y avec la nervure courte 13 est une nervure qui s'étend près du bord latéral 2 du plancher arrière.

De plus, la partie de nervure inclinée 14 et la nervure courte 13 sont situées dans une zone qui est proche du bord arrière 4 du plancher arrière. L'ouverture des deux branches du Y est ainsi dirigée vers le bord arrière 4 du véhicule.

Dans le cas du plancher arrière représenté sur la figure 2, les deux nervures 8a, 9a sont reliées l'une à l'autre par une partie de nervure 14a inclinée par rapport à l'axe X.

Cette partie de nervure inclinée 14a est située dans une zone proche du bord arrière du plancher arrière. Les nervures 8a et 9a sont ainsi reliées du côté de leur extrémité, la branche commune du Y formée par l'extrémité de la nervure 8a étant très courte par rapport au mode de réalisation précédent, les deux branches du Y formées par les nervures 8a et 9a étant en revanche très longues. Dans ce mode de réalisation, l'ouverture du Y est donc dirigée vers le bord avant 3 du plancher.

Par ailleurs, la nervure 8a, la nervure voisine 9a et la partie de nervure inclinée 14a sont situées dans une zone proche du milieu du plancher arrière.

Les figures 1 et 2 montrent d'autre part que toutes les nervures 5 à 12 ou 5a à 12a sont régulièrement espacées et que la distance comprise entre les nervures est sensiblement égale à la largeur des nervures.

Le nombre des nervures 5 à 12 ou 5a à 12a est égal à 8, mais peut varier entre 6 et 10 notamment en fonction de la largeur du véhicule destiné à être équipé d'un tel plancher arrière.

Les avantages obtenus par les planchers arrière selon l'invention s'expliquent essentiellement en raison des parties de nervure 14, 14a qui relient deux nervures voisines.

Etant donné que ces parties de nervure 14, 14a sont inclinées par rapport à l'axe X longitudinal du véhicule, leur présence sur le plancher arrière est sans incidence à l'égard de la rigidité du plancher aux efforts de flexion et de torsion.

Bien entendu, l'invention n'est pas limitée aux deux exemples que l'on vient de décrire et on peut apporter à ceux-ci de nombreuses modifications sans sortir du cadre de l'invention.

Ainsi, le plancher arrière pourrait comprendre plus de deux nervures reliées entre elles par des parties de nervure inclinées telles que les parties 14 et 14a.

En outre, ces deux nervures reliées entre elles par des parties inclinées pourraient être situées dans des zones différentes de celles représentées sur les figures 1 et 2.

Il est en outre possible de combiner les modes de réalisation représentés sur les figures 1 et 2.

## Revendications

1. Plancher arrière pour véhicule automobile comprenant une série de nervures (5 à 12 ; 5a à 12a) embouties dans la tôle du plancher, s'étendant dans la direction longitudinale (X) du véhicule, **caractérisé en ce que** l'une (12, 8a) au moins des nervures embouties est reliée à une nervure voisine (13, 9a) par une partie de nervure (14, 14a) inclinée par rapport à la direction longitudinale (X).

2. Plancher arrière selon la revendication 1, **caractérisé en ce que** ladite nervure (13, 8a), ladite partie de nervure inclinée (14, 14a) et ladite nervure voisine (13, 9a) forment ensemble un Y.

3. Plancher arrière selon la revendication 2, **caractérisé en ce que** ladite partie de nervure inclinée (14) et ladite nervure voisine (13) sont situées dans une zone proche du bord arrière (4) du plancher arrière, l'ouverture des deux branches du Y étant dirigée vers le bord arrière (4) du plancher.

4. Plancher arrière selon la revendication 3, **caractérisé en ce que** ladite nervure voisine (13) est située dans le prolongement d'une autre nervure (11) s'étendant parallèlement à ladite nervure (12).

5. Plancher arrière selon la revendication 2, **caractérisé en ce que** ladite partie de nervure inclinée (14a) est reliée à ladite nervure (8a) dans une zone proche du bord arrière (4) du plancher arrière, l'ouverture des deux branches du Y étant dirigée vers le bord avant (3) du plancher.

6. Plancher arrière selon l'une des revendications 1 à 5, **caractérisé en ce que** ladite nervure (12) s'étend près d'un bord latéral (2) dudit plancher arrière.

7. Plancher arrière selon l'une des revendications 1 à 5, **caractérisé en ce que** ladite nervure (8a), ladite partie de nervure inclinée (14a) et ladite nervure voisine (9a) sont situées dans une zone proche du milieu du plancher arrière.

8. Plancher arrière selon l'une des revendications 1 à 7, **caractérisé en ce que** lesdites nervures (5 à 12 et 5a à 12a) sont régulièrement espacées.

9. Plancher arrière selon l'une des revendications 1 à 8, **caractérisé en ce que** la distance comprise entre les nervures (5 à 12 et 5a à 12a) est sensiblement égale à la largeur des nervures.

10. Véhicule automobile équipé d'un plancher arrière selon l'une des revendications 1 à 9.

## Patentansprüche

1. Fondboden für ein Kraftfahrzeug, umfassend eine Reihe von Rippen (5 bis 12; 5a bis 12a), die aus dem Blech des Bodens ausgeprägt sind und sich in Längsrichtung (X) des Fahrzeugs erstrecken, **dadurch gekennzeichnet, dass** mindestens eine (12, 8a) der eingepressten Rippen durch einen bezüglich der Längsrichtung (X) geneigten Rippenteil (14, 14a) mit einer benachbarten Rippe (13, 9a) verbunden ist.

2. Fondboden nach Anspruch 1, **dadurch gekennzeichnet, dass** die Rippe (13, 8a), der geneigte Rippenteil (14, 14a) und die benachbarte Rippe (13, 9a) zusammen ein Y bilden.

3. Fondboden nach Anspruch 2, **dadurch gekennzeichnet, dass** sich der geneigte Rippenteil (14) und die benachbarte Rippe (13) in einem Bereich nahe dem hintere Rand (4) des Fondbodens befinden, wobei die Öffnung der beiden Arme des Y zu dem hinteren Rand (4) des Bodens gerichtet ist.

4. Fondboden nach Anspruch 3, **dadurch gekennzeichnet, dass** sich die benachbarte Rippe (13) in der Verlängerung einer anderen sich parallel zu der Rippe (12) erstreckenden Rippe (11) befindet.

5. Fondboden nach Anspruch 2, **dadurch gekennzeichnet, dass** der geneigte Rippenteil (14a) in einem Bereich nahe dem hinteren Rand (4) des Fondbodens mit der Rippe (8a) verbunden ist, wobei die Öffnung der beiden Arme des Y zu dem vorderen Rand (3) des Bodens gerichtet ist.

6. Fondboden nach einem der Ansprüche 1 bis 5, **dadurch gekennzeichnet, dass** sich die Rippe (12) nahe einem Seitenrand (2) des Fondbodens erstreckt.

7. Fondboden nach einem der Ansprüche 1 bis 5, **dadurch gekennzeichnet, dass** sich die Rippe (8a), der geneigte Rippenteil (14a) und die benachbarte Rippe (9a) in einem Bereich nahe der Mitte des Fondbodens befinden.

8. Fondboden nach einem der Ansprüche 1 bis 7, **dadurch gekennzeichnet, dass** die Rippen (5 bis 12 und 5a bis 12a) gleichmäßig beabstandet sind.

9. Fondboden nach einem der Ansprüche 1 bis 8, **dadurch gekennzeichnet, dass** der Abstand zwischen den Rippen (5 bis 12 und 5a bis 12a) im Wesentlichen gleich der Breite der Rippen ist.

10. Kraftfahrzeug, das mit einem Fondboden nach einem der Ansprüche 1 bis 9 ausgestattet ist.

## Claims

1. Rear floor for a motor vehicle comprising a series of ribs (5 to 12; 5a to 12a) pressed into the sheet metal of the floor, running in the longitudinal direction (X) of the vehicle, **characterized in that** at least one (12, 8a) of the pressed ribs is connected to an adjacent rib (13, 9a) by a rib part (14, 14a) that is inclined with respect to the longitudinal direction (X).

2. Rear floor according to Claim 1, **characterized in that** said rib (13, 8a), said inclined rib part (14, 14a) and said adjacent rib (13, 9a) together form a Y.

3. Rear floor according to Claim 2, **characterized in that** said inclined rib part (14) and said adjacent rib (13) are situated in a region near the rear edge (4) of the rear floor, the opening of the two branches of the Y facing toward the rear edge (4) of the floor.

4. Rear floor according to Claim 3, **characterized in that** said adjacent rib (13) is situated in the continuation of another rib (11) running parallel to said rib (12).

5. Rear floor according to Claim 2, **characterized in that** said inclined rib part (14a) is connected to said rib (8a) in a region near the rear edge (4) of the rear floor, the opening of the two branches of the Y facing toward the front edge (3) of the floor.

6. Rear floor according to one of Claims 1 to 5, **characterized in that** said rib (12) extends near a lateral edge (2) of said rear floor.

7. Rear floor according to one of Claims 1 to 5, **characterized in that** said rib (8a), said inclined rib part (14a) and said adjacent rib (9a) are situated in a region near the middle of the rear floor.

8. Rear floor according to one of Claims 1 to 7, **characterized in that** said ribs (5 to 12 and 5a to 12a) are uniformly spaced.

9. Rear floor according to one of Claims 1 to 8, **characterized in that** the distance between the ribs (5 to 12 and 5a to 12a) is more or less equal to the width of the ribs.

10. Motor vehicle equipped with a rear floor according to one of Claims 1 to 9.
